# EUROPEAN PATENT APPLICATION

(11) **EP 1 180 441 A1**
(43) Date of publication of application: **20.02.2002**
(21) Application number: 01202660.5
(22) Date of filing: 11.07.2001
(51) Int. Cl.: B60G 15/07, B60G 13/00, F16F 9/54

(54) **Weldless attachment of mounting bracket to reservoir tube of suspension strut assembly**

(30) Priority: 16.08.2000 US 639596
(71) Applicant: Delphi Technologies, Inc., Troy, MI 48007 (US)
(72) Inventor: Bobinger, David A., Middletown, OH 45044 (US); Cheatham, Claude H., West Carrollton, OH 45449 (US); Pees, James M., Centerville, OH 45459 (US); Wensits, John W., Dayton, OH 45440 (US); Leach, Allen L., Beavercreek, OH 45432 (US); Kinninger, Richard W., Arcanum, OH 45304 (US)
(74) Representative: Denton, Michael John

(57) **Abstract**

A mechanical interlock is provided between the attachment bracket 13 and the reservoir tube 12 of a suspension damper used in a suspension strut assembly that eliminates the welded joint used to secure these components in the prior art. The bracket defines a circumferential inner surface 56 which is installed over the outer circumferential surface 62 of the reservoir tube with a force or interference fit. After the bracket is installed on the reservoir tube, multiple indentations 90 are formed on the outer surface 54 of the bracket, which raise projections 92 on the inner surface 56 of the bracket and corresponding indentations 94 on the reservoir tube in which the projections rest to thereby form a mechanical interlock between the bracket and the reservoir tube.

## Description

### TECHNICAL FIELD

This invention relates to a vehicle suspension strut assembly in which the mounting bracket is secured to the reservoir tube by a mechanical interlock instead of by welding.

### BACKGROUND OF THE INVENTION

Modern vehicles are commonly equipped with a strut suspension system in which a damper forms the primary link securing the vehicle body to the chassis. The damper includes a reservoir tube which is secured to a chassis component (such as a vehicle wheel end assembly) by a mounting bracket attached to the outer surface of the reservoir tube, which in the prior art is attached to the reservoir tube by welding. However, welding is a time consuming and equipment intensive process, and quality welds must be assured since all of the suspension forces are transferred through the joint between the reservoir tube and the mounting bracket. Accordingly, replacement of the prior art welded attachment between the reservoir tube and the mounting bracket with a mechanical interlock, which offers potential cost, quality and performance improvements.

### SUMMARY OF THE INVENTION

According to the present invention, a mechanical interlock is provided between the attachment bracket and the reservoir tube of a suspension damper that eliminates the welded joint used to secure these components in the prior art. The attachment bracket includes a circumferentially extending portion that defines an inner circumferential surface that engages the outer circumferential surface of the reservoir tube with a force or interference fit. After the bracket is installed on the reservoir tube, indentations are formed on the outer surface of the circumferentially extending portion of the bracket, forming corresponding projections on the inner surface of the bracket, which form corresponding indentations in the outer circumferential surface of the reservoir tube. Accordingly, a mechanical interlock is formed between the reservoir tube and the bracket, which resists relative movement between the bracket and the reservoir tube.

### BRIEF DESCRIPTION OF THE DRAWINGS

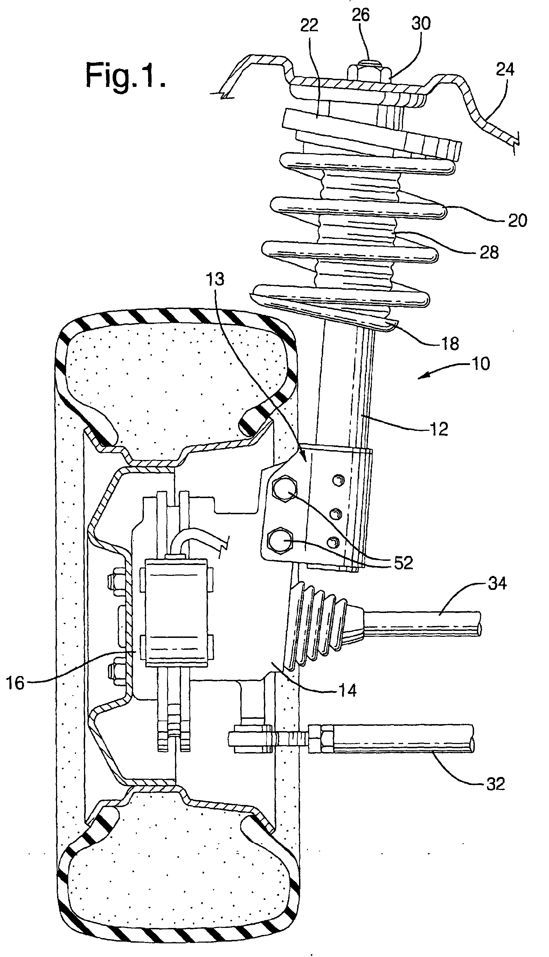

FIGURE 1 is a view in perspective of a strut suspension assembly illustrated connecting a vehicle chassis component to the vehicle body;
FIGURE 2 is a fragmentary view in perspective of a portion of the reservoir tube and mounting bracket made according to the present invention;
FIGURE 3 is a view similar to FIGURE 2, but illustrating the bracket and reservoir tube immediately before the bracket is installed on the reservoir tube;
FIGURE 4 is a fragmentary side elevational view of the reservoir tube and bracket of the present invention; and
FIGURE 5 is a fragmentary cross sectional view taken substantially along lines 5-5 of FIGURE 4.

### DESCRIPTION OF THE PREFERRED EMBODIMENT

Referring now to the drawings, a vehicle strut suspension system generally indicated by the numeral 10 includes a damper which includes a reservoir tube 12 which is secured to a non-rotating vehicle chassis component 14 by a bracket 13. The chassis component 14 rotatably mounts wheel 16 in a manner well known to those skilled in the art. A lower spring retainer 18 is secured to the reservoir tube 12, and a suspension spring 20 extends between the lower spring retainer 18 and an upper spring retainer 22, which is integral with the vehicle body indicated fragmentally at 24. The reservoir tube 12 is filled with damping fluid, and a piston (not shown) slides within the reservoir tube in response to normal movement of the vehicle. Fluid is metered across the piston in response to normal movements of the suspension system 10. A piston rod 26 secured to the piston and extends through the upper end of the reservoir tube 12, a flexible boot 28 within the suspension spring 20, and the upper spring seat 22. The rod 26 is secured to the vehicle body 24 by a conventional fastener 30. Since the piston (not shown) is connected to the vehicle body by piston rod 26 and the reservoir tube 12 is secured to chassis component 14 by the bracket 13, the damper dampens relative movement between chassis component 14 and the vehicle body 24 since the damping fluid is metered across the piston. The lower steering rod 32 of the vehicle is secured to the chassis component 14 for steering the wheel 16, and a drive shaft 34 rotates relative to the chassis component 14 to drive the wheel 16.

As discussed above, the reservoir tube 12 provides a part of the link controlling the wheel 16, and the bracket 13 must accordingly be rigidly secured to the reservoir tube 12.. As also discussed above, the know manner of securing the bracket to the reservoir tube was by welding, an inherently time consuming and equipment intensive process. According to the present invention, a mechanical interlock is provided between the reservoir tube and the bracket, so that the welded attachment is eliminated, thus reducing manufacturing costs.

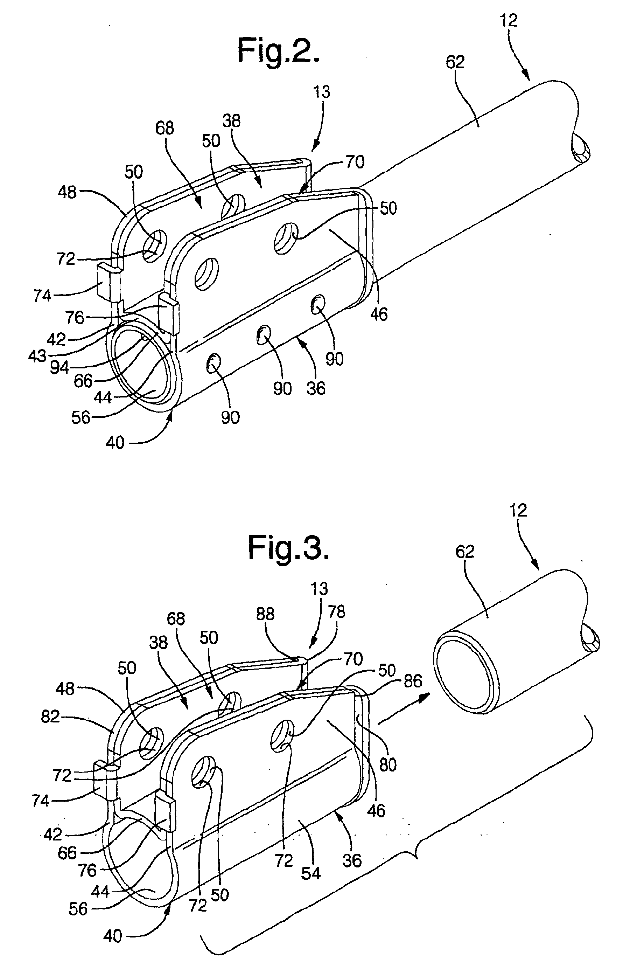

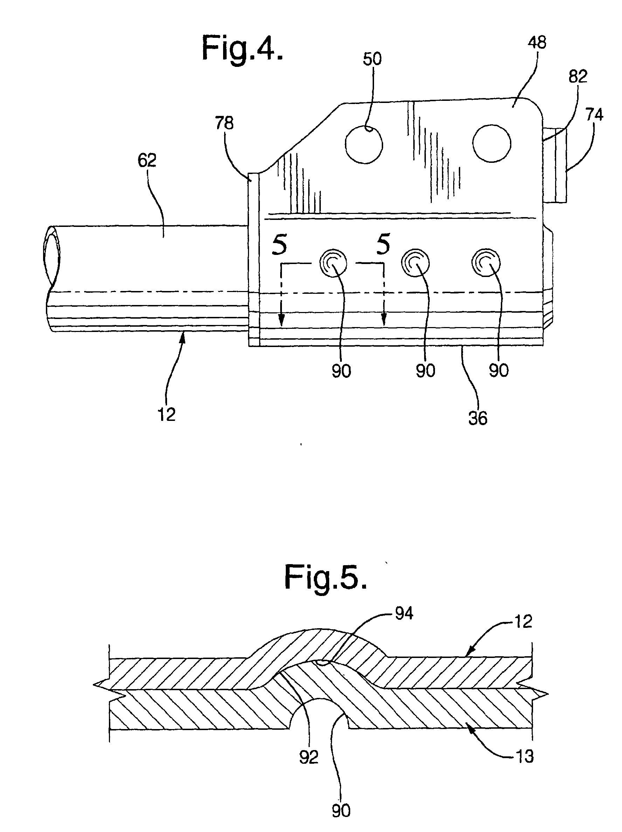

Referring now to FIGURES 3-5, the bracket 13 according to the present invention includes an outer bracket member 36 and an inner bracket member 38. Outer bracket member 36 includes a circumferentially extending portion 40 which terminates in contiguous ends 42, 44 which define a circumferentially extending gap 43 therebetween. A pair of attachment members 46,48 define an attachment portion of the bracket 13 and project outwardly from each of the contiguous ends 42,44. The attachment members 46, 48 define apertures 50, which receive fasteners 52 which extend across gap 43 between the attachment members 46,48 to secure the bracket to the chassis component 14. The circumferentially extending portion 40 further defines an outer circumferential surface 54 and an opposite inner circumferential surface 56. The reservoir tube 12 defines an outer circumferential surface 62, which has a diameter over which the circumferential portion 40 of the bracket 13 may be received with a force fit.

The inner bracket member 38 includes an arcuate section 66 which is sized to be received within the gap 43 defined between the contiguous ends 42,44. A pair of ears 68,70 project from opposite ends of the arcuate section 66 and extend parallel to, and in engagement with, the attachment members 46,48. The ears 68,70 are provided with apertures 72 which register with the apertures 50 when the inner bracket member 38 is installed on the outer bracket member 36. Inner bracket member 38 is further provided with locating flanges 74, 76 and 78,80 which project from opposite ends of the ears 68,70 and which engage corresponding end surfaces 82,84 and 86,88 of the attachment members 46,48. The inner bracket member 38 is secured to the outer bracket 40 in any appropriate way, such as by spot welding.

The bracket 13 is installed on the reservoir tube 12 by using an appropriate fixture to align the bracket and the reservoir and then forcing the bracket over the end of the reservoir tube. As discussed above, the diameters of the surfaces 56 and 62 are sized so that an interference or force fit is provided. After the bracket 13 is installed on the reservoir tube 12, multiple indentations 90 are formed in the outer circumferential surface 54 of the bracket 13, which form corresponding projections 92 on the inner circumferential surface 56 and corresponding indentations 94 in the outer circumferential surface 62 of the reservoir tube 12. The indentations and projections are aligned parallel to the axis defined by the circumferentially extending portion 40 and are formed by any appropriate process, such as punching. To reinforce the reservoir tube 12 and prevent collapse of the reservoir tube 12, the reservoir tube 12 is installed on a mandrel before the indentations and projections are formed. The indentations 94 and projections 92 provide a mechanical interlock which meets or exceeds welding specifications with regard to relative axial or circumferential loads applied to the bracket 13 and reservoir tube 12. Although the indentations 90,94 and projections 92 are illustrated as being semispherical, the indentations and projections may be any suitable geometric shape (square, rectangular, oval, hexagonal, etc.) to optimize load carrying capacity and to facilitate attachment of the bracket to the reservoir tube.

## Claims

1. In a strut assembly for a vehicle suspension system, a reservoir tube 12 having an outer circumferential surface 62 and a mounting bracket 13 for securing the reservoir tube to a chassis component, said mounting bracket including a circumferentially extending inner surface 56 circumscribing said circumferential surface of said reservoir tube and an attachment portion 46, 48 projecting outwardly from the circumferentially extending portion for attachment to said chassis component, and a weld-less mechanical lock 90, 92, 94 securing said circumferentially extending portion to said reservoir tube to constrain relative movement between the bracket and the tube both circumferentially and axially in response to normal movement of the vehicle suspension system.

2. Strut assembly as claimed in claim 1, wherein said mechanical lock includes an inwardly extending projection 92 on one of said surfaces and a registering indentation 94 in the other surface, the projection on said one surface locking into said indentation on the other surface.

3. Strut assembly as claimed in claim 1, wherein said mechanical lock includes multiple inwardly extending projections 92 on one of said surfaces and corresponding registering indentations 94 on the other surface, the projections on said one surface locking into corresponding indentations on said other surface.

4. Strut assembly as claimed in claim 3, wherein said indentations 94 and projections 92 are aligned along a line parallel to the axes of the bracket and the reservoir tube.

5. Strut assembly as claimed in claim 3, wherein said indentations 94 are defined on the outer circumferential surface 62 of the reservoir tube and the projections 92 are defined on the inner surface 56 of the mounting bracket.

6. Strut assembly as claimed in claim 5, wherein the mounting bracket includes an outer surface 54, said projections 92 on the inner surface 56 of the bracket corresponding to indentations 90 on the outer surface of the mounting bracket.

7. Strut assembly as claimed in claim 2, wherein the circumferentially extending inner surface 56 of the bracket terminates in a pair of circumferentially spaced, contiguous ends 42, 44 defining an axially extending gap 43 therebetween, said attachment portion including a pair of attachment members 46, 48, each of said attachment members projecting outwardly from a corresponding one of the contiguous ends.

8. Strut assembly as claimed in claim 7, wherein said bracket further includes a member 38 received between said attachment members and having an arcuate section 66 received between said contiguous ends 42, 44 and substantially filling the gap 43 therebetween and a pair of ears 68, 70 extending outwardly from the arcuate section, each of said ears being secured to a corresponding one of said attachment members.

9. Strut assembly as claimed in claim 8, wherein said mechanical lock includes multiple radially inwardly extending projections 92 on one of said surfaces and corresponding registering indentations 94 on the other surface, the projections on said one surface locking into corresponding indentations on said other surface.

10. In a strut assembly for a vehicle suspension system, a reservoir tube 12 having an outer circumferential surface 62 and a mounting bracket 13 for securing the reservoir tube to a chassis component, said mounting bracket including a circumferentially extending portion 40 defining an inner surface 56 circumscribing said circumferential surface 62 of said reservoir tube and an attachment portion 46, 48 projecting outwardly from the circumferentially extending portion for attachment to said chassis component, and weld-less cooperating interlocking means 90, 92, 94 on said bracket and on said reservoir tube for securing said reservoir tube to the bracket to constrain relative movement between the bracket and the tube both circumferentially and axially in response to normal movement of the vehicle suspension system.

11. Strut assembly as claimed in claim 10, wherein said cooperating interlocking means join the outer circumferential surface 62 of the reservoir tube and the inner surface 56 of the bracket.

12. Strut assembly as claimed in claim 11, wherein said cooperating interlocking means includes a projection 92 on one of said surfaces and a registering indentation 94 in the other surface, the projection on said one surface locking into said indentation on the other surface.

13. Strut assembly as claimed in claim 11, wherein said cooperating interlocking means includes multiple projections 92 on one of said surfaces and corresponding registering indentations 94 on the other surface, the projections on said one surface locking into corresponding indentations on said other surface.

14. Strut assembly as claimed in claim 13, wherein said indentations and projections are aligned along a line parallel to the axes of the bracket and the reservoir tube.
